# FASCICULE DE BREVET EUROPEEN

(11) **EP 2 828 215 B1**
(45) Date de publication et mention de la délivrance du brevet: **16.05.2018**
(21) Numéro de dépôt: 13715283.1
(22) Date de dépôt: 08.03.2013
(51) Int. Cl.: C03C 17/34, C03C 17/36

(54) **VITRAGE DE CONTROLE SOLAIRE**
SONNENSCHUTZVERGLASUNG
SOLAR CONTROL GLAZING

(30) Priorité: 21.03.2012 FR 1252523
(43) Date de publication de la demande: 28.01.2015
(73) Titulaire: Saint-Gobain Glass France, 92400 Courbevoie (FR)
(72) Inventeur: SINGH, Laura Jane, F-75009 Paris (FR); PALACIOS-LALOY, Augustin, F-38000 Grenoble (FR); SANDRE-CHARDONNAL, Etienne, 44200 NANTES (FR)
(74) Mandataire: Saint-Gobain Recherche
(86) Numéro de dépôt international: PCT/FR2013/050490
(87) Numéro de publication internationale: WO 2013/140061

(56) Documents cités:
- WO-A2-03/048061
- US-A- 5 514 476
- US-A- 5 800 933
- US-A1- 2002 141 064
- US-A1- 2009 320 824

## Description

L'invention se rapporte au domaine des substrats ou articles verriers, notamment du type vitrage de bâtiments ou automobiles, comprenant à leur surface des revêtements obtenus par l'empilement d'une succession de couches minces, leur conférant des propriétés de contrôle solaire, en particulier antisolaires. Par vitrage, on entend au sens de la présente invention tout produit verrier constitué par un ou plusieurs substrats verriers, en particulier les simples vitrages, les doubles vitrages, les triples vitrages etc. Par antisolaire, on entend au sens de la présente invention la faculté du vitrage de limiter sélectivement le flux énergétique incident, notamment du rayonnement Infrarouge (IR) issu du rayonnement solaire, le traversant depuis l'extérieur vers l'intérieur de l'habitation ou de l'habitacle, tout en conservant une transmission lumineuse suffisante, c'est-à-dire typiquement supérieure à 40, voire 50 ou même 55%. Plus particulièrement, la présente invention se rapporte à des vitrages munis d'empilements dont la couche fonctionnelle ou active, c'est-à-dire celle conférant audit empilement l'essentiel de telles propriétés, est constitué par un oxyde mixte d'étain et d'indium, souvent appelé ITO dans le domaine.

De tels vitrages munis d'empilements de couches minces agissent ainsi sur le rayonnement solaire et permettent une protection solaire et/ou une isolation thermique. Ces revêtements sont de façon classique déposés par des techniques de dépôt du type CVD pour les plus simples ou le plus souvent à l'heure actuelle par des techniques de dépôt par pulvérisation sous vide d'une cible, souvent appelé magnétron dans le domaine, notamment lorsque le revêtement est constitué d'un empilement plus complexe de couches successives.

Le plus souvent les empilements en couches minces ayant des propriétés de contrôle solaire comprennent une, voire plusieurs, couches actives. Par couche active on entend une couche agissant de manière sensible sur le flux de rayonnement solaire traversant ledit vitrage. Une telle couche active, de façon connue, peut fonctionner soit principalement en mode de réflexion du rayonnement Infrarouge, soit principalement en mode d'absorption du rayonnement Infrarouge.

Notamment, les empilements les plus performants commercialisés à l'heure actuelle incorporent au moins une couche métallique du type Argent fonctionnant essentiellement sur le mode de la réflexion du rayonnement IR. On qualifie le plus souvent ces empilements de bas émissifs (low-e en anglais). Ces couches sont cependant très sensibles à l'humidité et sont donc exclusivement utilisées dans des doubles vitrages, en face 2 ou 3 de celui-ci pour être protégées de l'humidité. Les empilements selon l'invention ne comprennent pas de telles couches.

Les brevets et demandes de brevets US 5,800,933, EP 456487 A2, EP 560534 A1 et EP 622645 A1 décrivent des empilements des couches intermédiaires de NiCr ou de Ni entourant une couche bas émissive d'argent. Selon ces publications, l'emploi de telles couches intermédiaires permet de résoudre les problèmes d'adhésion de la couche métallique Ag aux couches diélectriques disposées de part et d'autre de l'empilement, comme il est également indiqué dans la publication « Airca Coating Technology, Procceddings of the 2nd Coating Technilogy Symposium, March 12-14, 1990. »

D'autres couches métalliques à fonction antisolaire ont également été décrites dans le domaine, comprenant des couches fonctionnelles du type Nb, Ta ou W ou des nitrures de ces métaux, tel que décrit par exemple dans la demande WO01/21540. Cependant, au sein de telles couches, le rayonnement solaire est cette fois absorbé mais de manière non sélective, c'est-à-dire que le rayonnement IR (en particulier celui dont la longueur d'onde est compris entre environ 780 nm et 2500 nm) et le rayonnement visible sont également absorbés de manière non sélective. De tels vitrages présentent ainsi des sélectivités, telles qu'illustrées par le ratio T_{L}/g, inférieures à ou au mieux proche de 1.

Selon l'invention et conventionnellement, la sélectivité est égale au rapport facteur de Transmission Lumineuse/facteur solaire g, tels que déterminés selon la norme internationale ISO 9050 (2003).

De manière connue et classique, dans le rapport précédent, le facteur de transmission lumineuse (souvent appelé transmission lumineuse T_{L}) correspond au pourcentage du flux lumineux incident, c'est-à-dire dans le domaine de longueurs d'onde 380 à 780 nm, traversant le vitrage, selon l'illuminant D₆₅ et selon les critères déterminés dans la norme internationale ISO 9050 (2003).

De manière connue, dans le rapport précédent, le facteur solaire FS, souvent également appelé g, est égal au rapport de l'énergie traversant le vitrage (c'est-à-dire entrant dans le local) et de l'énergie solaire incidente. Plus particulièrement, il correspond à la somme du flux transmis directement à travers le vitrage et du flux absorbé par le vitrage (en y incluant les empilements de couches éventuellement présents à l'une de ses surfaces) puis réémis vers l'intérieur (le local). Le facteur solaire est également déterminé selon les indications décrites dans la norme internationale ISO 9050 (2003).

D'une manière générale, toutes les caractéristiques lumineuses présentées dans la présente description sont obtenues selon les principes et méthodes décrits dans la norme internationale ISO 9050 (2003) se rapportant à la détermination des caractéristiques lumineuses et solaires des vitrages utilisés dans le verre pour la construction.

La demande de brevet US 2009/0320824 décrit alternativement des empilements basés sur l'utilisation de couches d'indium dopé à l'étain (ITO) comme couche barrière aux infrarouges. Selon cette publication, l'apposition d'un couche en oxyde de silicium SiO₂ ou en nitrure de silicium Si₃N₄ au dessus de la couche ITO améliore sensiblement la durabilité de l'empilement lorsque celui-ci est soumis à des températures pouvant aller jusqu'à 500°C. De même, il est indiqué que l'insertion d'une couche en oxyde de silicium SiO₂ ou en nitrure de silicium Si₃N₄ en dessous de la couche ITO permet de prévenir la migration des alcalins depuis le substrat vers la couche d'ITO, et donc sa détérioration. L'utilisation de couches en oxyde de silicium, d'épaisseur au minimum égale, mais le plus souvent très supérieure à 100 nm comme il est indiqué dans cette publication, pose cependant un problème de rentabilité économique, en raison de la trop faible vitesse de dépôt de la couche SiO₂ par la technique dite de pulvérisation cathodique magnétron. L'utilisation de couches en nitrure de silicium apparaît donc préférable d'un point de vue économique, sa vitesse de dépôt étant environ trois fois plus élevé que celle de l'oxyde de silicium. Comme il sera expliqué plus en détail par la suite, les travaux de la société déposante ont cependant montré que l'utilisation de telles couches nitrurées, notamment si le vitrage muni de l'empilement doit subir un traitement thermique à plus haute température, se traduit par l'apparition d'un flou sur le vitrage, qui le rend impropre notamment à une utilisation en tant que vitrage pour bâtiment. Egalement, il a été trouvé qu'un tel empilement présente des propriétés de résistance mécanique notoirement insuffisantes, notamment à la rayure, comme il sera décrit dans la suite de la présente description.

Le principal but de la présente invention est tout d'abord de fournir des vitrages comprenant un empilement de couches leur conférant des propriétés de contrôle solaire, et notamment de réflexion de l'Infrarouge du rayonnement solaire, mais présentant une sélectivité élevée, au sens précédemment décrit, c'est-à-dire un rapport T_{L/}g supérieur à 1,1 ou même supérieur à 1,2, ledit empilement étant par ailleurs durable dans le temps sans précaution particulière.

Un autre but de la présente invention est de fournir des vitrages de contrôle solaire dont l'empilement de couches est capable, notamment après un traitement thermique tel qu'une trempe ou un bombage, de conserver des valeurs de T_{L} suffisamment élevées pour une utilisation comme vitrage « clair », et en particulier une T_{L} de l'ordre d'au moins 40%, notamment de l'ordre d'au moins 50% et dans l'idéal supérieure à 55%, sans dégradation notable des propriétés de réflexion de l'IR de l'empilement.

Ainsi, selon un autre aspect de la présente invention, un traitement thermique sur le vitrage est généralement nécessaire pour permettre l'amélioration des propriétés de réflexion du rayonnement IR de la face du vitrage équipée avec l'empilement de couche, tel que mesurées par l'émissivité normale ε_{N} décrite dans la norme ISO 10292 (1994), annexe A. De façon bien connue, par exemple décrite dans la publication de référence « Les techniques de l'ingénieur, Vitrage à isolation thermique renforcée, C3635 (2004)», cette propriété de réflexion est directement fonction de l'émissivité de la face du vitrage munie de l'empilement comprenant la couche réfléchissante dans l'IR. En particulier, de façon connue, les couches fonctionnelles selon l'invention, du type ITO (Indium Tin Oxide ou encore oxyde mixte d'Indium et d'étain), après leur dépôt par pulvérisation cathodique, doivent le plus souvent subir un traitement thermique à des températures de l'ordre de 620°C pendant quelques minutes pour en améliorer la cristallinité et ainsi en réduire l'émissivité. L'invention propose ainsi des vitrages dont l'émissivité normale ε_{N} est minimale après un tel traitement thermique, en particulier inférieur à 20% et de préférence inférieure à 15%.

Bien entendu, selon une propriété essentielle à leur potentiel d'utilisation, les empilements de couches minces équipant les vitrages selon l'invention doivent également être suffisamment résistants mécaniquement, notamment s'ils doivent être positionnés sur une face externe du vitrage. Ils doivent en particulier être résistants aux rayures qui pourront être occasionnées par les différents moyens utilisés pour leur nettoyage.

Au final, un vitrage selon l'invention permet ainsi avantageusement de sélectionner le rayonnement le traversant, en favorisant la transmission des ondes lumineuses, c'est-à-dire dont la longueur d'onde est comprise entre environ 380 et 780 nm, tout en réfléchissant sélectivement une partie plus importante des radiations infrarouges, c'est-à-dire dont la longueur d'onde est supérieure à 780 nm, en particulier les Infrarouges proches, c'est-à-dire dont la longueur d'onde est comprise entre environ 780nm et environ 1400 nm.

Selon l'invention, il est ainsi possible de maintenir une forte illumination de la pièce ou de l'habitacle protégé par le vitrage tout en minimisant la quantité de chaleur y entrant à cause du rayonnement solaire par temps ensoleillé, dont le caractère bas émissif permet en outre par temps froid de minimiser la perte de chaleur à travers le vitrage.

Selon un autre avantage de la présente invention, ils sont également bien moins sensible chimiquement, notamment à l'humidité et peuvent donc être positionné sur une face externe d'un vitrage multiple ou sur une des faces d'un vitrage simple, en particulier sa face 2 (c'est-à-dire celle tournée vers l'intérieur).

Plus précisément, la présente invention se rapporte à un vitrage de contrôle solaire comprenant un substrat verrier muni sur une de ses faces d'un empilement de couches à fonction antisolaire, dans lequel l'empilement comprend la succession des couches suivantes, à partir de la surface du substrat verrier :
- une couche inférieure de protection des couches supérieures contre la migration des ions alcalins issus du substrat verrier, d'épaisseur comprise entre 25 et 100 nm, de préférence entre 40 et 90 nm,
- une couche d'un oxyde mixte d'Indium et d'étain (ITO), d'épaisseur comprise entre 100 et 250 nm, de préférence entre 100 et 200 nm,
- une couche supérieure de protection de la couche ITO contre l'oxygène de l'air, notamment lors d'un traitement thermique tel qu'une trempe ou un recuit, la couche supérieure étant d'épaisseur comprise entre 25 et 100 nm, de préférence entre 40 et 90 nm,
- lesdites couches supérieure et inférieure sont constituées essentiellement par un matériau diélectrique choisi parmi un nitrure de silicium, un nitrure d'aluminium ou leur mélange,
- des couches intermédiaires faites dans un métal comprenant du chrome, éventuellement partiellement ou entièrement oxydées et/ou nitrurées, sont disposées de part et d'autre et au contact de ladite couche d'ITO, l'épaisseur desdites couches intermédiaires étant comprise entre 0,5 et 3 nanomètres.

On entend par l'expression « éventuellement partiellement ou entièrement oxydées et/ou nitrurées » que les couches intermédiaires, classiquement déposées initialement sous la forme de couches entièrement métalliques par les techniques classiques de pulvérisation cathodique, peuvent ensuite potentiellement s'oxyder ou se nitrurer, partiellement ou totalement, sous l'effet des différents dépôts des couches ou encore des traitements thermiques effectués ultérieurement. Par exemple, une nitruration de la couche intermédiaire métallique est possible selon l'invention quand une couche nitrurée de l'empilement est déposée ultérieurement par pulvérisation réactive en présence d'azote, comme pour le cas du dépôt de la couche protectrice supérieure en nitrure de silicium. De même, sans sortir du cadre de l'invention, une oxydation ultérieure de la couche intermédiaire métallique est possible lors du dépôt magnétron de la couche d'ITO en présence d'oxygène ou encore lors d'un traitement thermique ultérieur, après dépôt de l'empilement complet comme il est indiqué précédemment.

Au sens de la présente invention on entend par oxyde d'indium-étain (ou encore oxyde d'indium dopé à l'étain ou ITO pour l'appellation anglaise : Indium tin oxide) un oxyde mixte ou un mélange obtenu à partir des oxydes d'indium(III) (In₂O₃) et d'étain (IV) (SnO₂), de préférence dans les proportions massiques comprises entre 70 et 95% pour le premier oxyde et 5 à 20% pour le second oxyde. Une proportion massique typique est d'environ 90 % massique d'In₂O₃ pour environ 10 % massique de SnO₂.

Selon des modes ayant donné de bonnes performances :
- L'épaisseur desdites couches intermédiaires est comprise entre 1 et 2,5 nanomètres.
- Le métal comprend au moins 10% massique de Cr de préférence au moins 20% massique de Cr.
- Le métal est un alliage de Nickel et de Chrome.
- Le rapport massique Cr/Ni dans l'alliage est compris entre 10/90 et 40/60, notamment d'environ 20/80.
- les couches de protection inférieure et supérieure sont constituées essentiellement par un nitrure de Silicium, éventuellement dopé par un élément choisi parmi Al, Zr ou B.
- l'empilement comprend en outre, au dessus de la couche supérieure, une couche en un oxyde diélectrique choisi parmi l'oxyde de silicium ou un oxyde de titane.
- l'épaisseur de la couche en oxyde diélectrique est comprise entre 1 et 15 nanomètres, de préférence encore entre 2 et 10 nanomètres.

A titre d'exemple, un vitrage de contrôle solaire préféré selon l'invention comprend un empilement constitué par la succession des couches suivantes, à partir de la surface du substrat verrier :
- une couche inférieure constituée essentiellement de nitrure de silicium et comprenant éventuellement de l'aluminium, d'épaisseur comprise entre 30 et 100 nm, de préférence entre 40 et 90 nm,
- une première couche intermédiaire d'un alliage de Nickel et de Chrome, éventuellement partiellement ou entièrement oxydée et/ou nitrurée, d'épaisseur comprise entre 0,5 et 3 nm, de préférence entre 1 et 2,5nm,

- une couche d'ITO d'épaisseur comprise entre 100 et 250 nm,
- une deuxième couche intermédiaire d'un alliage de Nickel et de Chrome, éventuellement partiellement ou entièrement oxydée et/ou nitrurée, d'épaisseur comprise entre 0,5 et 3 nm, de préférence entre 1 et 2,5nm,
- une couche supérieure constituée essentiellement de nitrure de silicium et comprenant éventuellement de l'aluminium, d'épaisseur comprise entre 30 et 100 nm.

De préférence, l'empilement précédent comprend en outre, au dessus de la couche supérieure, une couche en un oxyde diélectrique choisi parmi l'oxyde de silicium ou un oxyde de titane, d'épaisseur comprise entre 1 et 10 nm.

Les exemples qui suivent sont donnés à titre purement illustratifs et ne limitent sous aucun des aspects décrits la portée de la présente invention. A des fins de comparaison, tous les empilements des exemples qui suivent sont synthétisés sur des substrats verriers simples. Toutes les couches des empilements ont été déposées selon les techniques classiques de dépôts sous vide par pulvérisation magnétron.

### Exemple 1:

Dans cet exemple selon l'invention, on a déposé, selon les techniques classiques magnétrons, une succession de couches pour l'obtention d'un empilement constitué par la séquence de couches suivante :

| | | | | | |
|---|---|---|---|---|---|
| Verre | /Si₃N₄ | /NiCr | / ITO | /NiCr | /Si₃N₄ |
| | (56nm) | (1nm) | (175nm) | (1nm) | (70nm) |

L'empilement est déposé sur un substrat constitué par une feuille de verre commercialisée par la société Saint-Gobain Glass France sous la référence Parsol H®, dont la transmission lumineuse initiale est égale à 0,74 et le facteur g est égal à 0,60.

Plus précisément et conformément aux techniques habituelles dans le domaine, les couches successives sont déposées dans les compartiments spécifiques et successifs du dispositif de pulvérisation cathodique, chaque compartiment étant muni spécifiquement, suivant la couche à déposer, d'une atmosphère et de cibles en Si métallique, en un alliage Nickel-Chrome de ratio ajusté ou en ITO.

Les couches en nitrure de silicium (souvent notées Si₃N₄ dans les formulations ci-jointes par commodité, même si cette stoechiométrie n'est pas forcément respectée) sont déposées dans un premier compartiment du dispositif à partir d'une cible de silicium métallique dopé avec 8% en masse d'aluminium, dans une atmosphère réactive contenant de l'argon et de l'azote selon les processus et conditions opératoires bien connus dans le domaine. Les couches en Si₃N₄ contiennent donc un peu d'aluminium.

Les couches de NiCr métalliques sont obtenues par pulvérisation d'une cible en alliage NiCr (80% poids de Ni et 20% poids de Cr) par un plasma constitué exclusivement d'Argon, selon les processus et conditions opératoires bien connus dans le domaine.

Les couches en ITO sont obtenues par pulvérisation d'une cible (90% poids d'oxyde Indium et 10% poids d'oxyde d'étain) dans une atmosphère contenant essentiellement de l'argon et une faible part d'oxygène, selon les processus et conditions opératoires bien connus dans le domaine.

Le substrat muni de son empilement a ensuite été soumis à un traitement thermique consistant en un chauffage à 620°C pendant 8 minutes suivi d'une trempe.

Sur le vitrage selon l'invention, on mesure les facteurs T_{L} et g afin d'en déterminer la sélectivité.

L'émissivité à incidence normale ε_{N} est également mesurée sur la face intérieure du substrat recouverte de l'empilement de couches, selon les conditions décrites dans la norme ISO 10292 (1994), annexe A.

### Exemple 2 (comparatif) :

Selon cette réalisation, on a pratiqué de façon identique à l'exemple 1 dans le même dispositif et suivant les mêmes processus et obtenu un empilement sensiblement identique, à l'exception que les couches en NiCr n'ont pas été déposées. L'empilement est donc constitué par la séquence de couches suivante :

| | | | |
|---|---|---|---|
| Verre | /Si₃N₄ | / ITO | / Si₃N₄ |
| | (56nm) | (175nm) | (70nm) |

Sur ce vitrage, on a mesuré dans les mêmes conditions que précédemment les facteurs T_{L}, g et ε_{N}.

### Exemple 3 (selon l'invention) :

Dans cet exemple, on a pratiqué de façon identique à l'exemple 1 et obtenu un empilement sensiblement identique, à l'exception que les couches en NiCr présentent une épaisseur de 1,6 nm. L'empilement est donc constitué par la séquence de couches suivante :

| | | | | | |
|---|---|---|---|---|---|
| Verre | /Si₃N₄ | /NiCr | / ITO | /NiCr | /Si₃N₄ |
| | (56nm) | (1,6nm) | (175nm) | (1,6nm) | (70nm) |

Sur ce vitrage, on a mesuré dans les mêmes conditions que précédemment les facteurs T_{L}, g et ε_{N}.

### Exemple 4 (selon l'invention) :

Dans cet exemple, on a pratiqué de façon identique à l'exemple 1 et obtenu un empilement sensiblement identique, à l'exception que les couches en NiCr présentent une épaisseur de 2,5 nm. L'empilement est donc constitué par la séquence de couches suivante :

| | | | | | |
|---|---|---|---|---|---|
| Verre | /Si₃N₄ | /NiCr | / ITO | /NiCr | /Si₃N₄ |
| | (56nm) | (2,5nm) | (175nm) | (2,5nm) | (70nm) |

Sur ce vitrage, on a mesuré dans les mêmes conditions que précédemment les facteurs T_{L}, g et ε_{N}.

### Exemple 5 (comparatif) :

Dans cet exemple, on a pratiqué de façon identique à l'exemple 1 et obtenu un empilement sensiblement identique, à l'exception que les couches en NiCr présentent une épaisseur de 4,0 nm. L'empilement est donc constitué par la séquence de couches suivante:

| | | | | | |
|---|---|---|---|---|---|
| Verre | /Si₃N₄ | /NiCr | / ITO | /NiCr | /Si₃N₄ |
| | (56nm) | (4,0nm) | (175nm) | (4,0nm) | (70nm) |

Sur ce vitrage, on a mesuré dans les mêmes conditions que précédemment les facteurs T_{L}, g et ε_{N}.

Les caractéristiques des différents vitrages obtenus, sont reportées dans le tableau 1 qui suit :

**Tableau 1**

| | Exemple 1 | Exemple 2 | Exemple 3 | Exemple 4 | Exemple 5 |
|---|---|---|---|---|---|
| Couche réfl. IR | ITO | ITO | ITO | ITO | ITO |
| Epaisseur (nm) Couche réfl. | 175 | 175 | 175 | 175 | 175 |
| Couches NiCr | oui | non | oui | oui | oui |
| Epaisseur (nm) couches NiCr | 1 | - | 1,6 | 2,5 | 4,0 |
| T_{L} (%) | 55 | 63 | 49 | 46 | 34 |
| g (%) | 42 | 46 | 39 | 38 | 31 |
| Sélectivité (T_{L}/g) | 1,31 | 1,37 | 1,25 | 1,21 | 1,10 |
| ε_{N} (%) | 13 | 16 | 13 | 16 | 13 |
| Aspect visuel | transparent | Flou sur les bords | transparent | Très léger flou sur les bords | Flou sur les bords |

La comparaison des données reportées dans le tableau 1 montre que l'empilement comparatif selon l'exemple 2 présente la meilleure sélectivité mais également un flou parfaitement visible sur les bords de l'échantillon, qui rend l'utilisation d'un tel vitrage impossible. Le dépôt d'une couche plus épaisse de NiCr selon l'exemple 4 se traduit en outre par diminution sensible de la sélectivité, due à une chute sensible de la transmission lumineuse.

### Tests de résistance à la rayure :

On mesure la résistance à la rayure des empilements selon les exemples 1 à 5, selon la technique EST (Erichsen Scratch Test). Il s'agit de reporter la valeur de la force appliquée nécessaire, en Newton, pour réaliser une rayure dans l'empilement lors de la réalisation du test (pointe de Van Laar, bille d'acier). La valeur retenue est la première valeur ayant conduit à une rayure continue et visible à l'oeil nu.

La valeur reportée dans le tableau 2 qui suit est donc la force exercée (en newtons) ayant entraînée l'apparition de rayures continues.

**Tableau 2**

| | Exemple 2 | Exemple 3 | Exemple 4 | Exemple 5 |
|---|---|---|---|---|
| Force exercée (N) | 0,2 | 0,6 | 2,0 | 2,0 |

Les données reportées dans le tableau 2 montrent que les empilements munis des couches NiCr présentent une résistance mécanique sensiblement améliorée par comparaison avec l'empilement selon l'exemple 2 dépourvu de telles couches.

### Exemples 6 et 7 (comparatifs) :

Dans ces exemples, on a pratiqué de façon identique à l'exemple et obtenu un empilement sensiblement identique, à l'exception que les couches en NiCr de l'exemple 1 sont remplacées par des couches en titane métallique d'épaisseur respectivement 1,6 et 4,0 nm, obtenues par pulvérisation de cibles cette fois en titane, dans une atmosphère d'argon.

L'empilement selon l'exemple 6 est constitué par la séquence de couches suivante :

| | | | | | |
|---|---|---|---|---|---|
| Verre | /Si₃N₄ | /Ti | / ITO | /Ti | /Si₃N₄ |
| | (56nm) | (1,6nm) | (175nm) | (1,6nm) | (70nm) |

L'empilement selon l'exemple 7 est constitué par la séquence de couches suivante :

| | | | | | |
|---|---|---|---|---|---|
| Verre | /Si₃N₄ | /Ti | / ITO | /Ti | /Si₃N₄ |
| | (56nm) | (4,0nm) | (175nm) | (4,0nm) | (70nm) |

Sur ce vitrage, on a mesuré dans les mêmes conditions que précédemment les facteurs T_{L}, g et ε_{N} et la résistance des revêtements aux rayures. Les résultats sont réunis dans le tableau 3 ci-dessous :

**Tableau 3**

| | Exemple 6 | Exemple 7 |
|---|---|---|
| Couche réfl. IR | ITO | ITO |
| Epaisseur (nm) Couche réfl. | 175 | 175 |
| Couches Ti | oui | oui |
| Epaisseur (nm) couches Ti | 1,6 | 4,0 |
| T_{L} (%) | 53 | 30 |
| g (%) | 40 | 29 |
| Sélectivité (T_{L}/g) | 1,32 | 1,05 |
| ε_{N} (%) | 14 | 15 |
| Aspect visuel | transparent | flou+points marrons |
| Force exercée pour rayure (N) | 0,2 | 0,1 |

On voit clairement que contrairement aux couches en NiCr, les couches en Ti disposées de part et d'autre de la couche active réfléchissante d'ITO n'apportent cette fois aucun gain dans les performances de résistance à la rayure de l'empilement.

## Revendications

1. Vitrage de contrôle solaire comprenant un substrat verrier muni sur une de ses faces d'un empilement de couches à fonction antisolaire, dans lequel l'empilement comprend la succession des couches suivantes, à partir de la surface du substrat verrier :
- une couche inférieure de protection des couches supérieures contre la migration des ions alcalins issus du substrat verrier, d'épaisseur comprise entre 25 et 100 nm,
- une couche d'un oxyde mixte d'Indium et d'étain (ITO), d'épaisseur comprise entre 100 et 250 nm,
- une couche supérieure de protection de la couche ITO contre l'oxygène de l'air, notamment lors d'un traitement thermique tel qu'une trempe ou un recuit, la couche supérieure étant d'épaisseur comprise entre 25 et 100 nm,
ledit vitrage étant **caractérisé en ce que** :
- lesdites couches supérieure et inférieure sont constituées essentiellement par un matériau diélectrique choisi parmi un nitrure de silicium, un nitrure d'aluminium ou leur mélange,
- des couches intermédiaires faites dans un métal comprenant du chrome, éventuellement partiellement ou entièrement oxydées et/ou nitrurées, sont disposées de part et d'autre et au contact de ladite couche d'ITO, l'épaisseur desdites couches intermédiaires étant comprise entre 0,5 et 3 nanomètres.

2. Vitrage selon la revendication précédente, dans lequel l'épaisseur desdites couches intermédiaires est comprise entre 1 et 2,5 nanomètres.

3. Vitrage selon l'une des revendications précédentes, dans lequel le métal comprend au moins 10% massique de Cr.

4. Vitrage selon l'une des revendications précédentes, dans lequel le métal est un alliage de Nickel et de Chrome.

5. Vitrage selon la revendication précédente, dans lequel le rapport massique Cr/Ni dans l'alliage est compris entre 10/90 et 40/60.

6. Vitrage selon l'une des revendications précédentes, dans lequel les couches de protection inférieure et supérieure sont constituées essentiellement par un nitrure de Silicium, éventuellement dopé par un élément choisi parmi Al, Zr ou B.

7. Vitrage selon l'une des revendications précédentes, comprenant en outre, au dessus de la couche supérieure, une couche en un oxyde diélectrique choisi parmi l'oxyde de silicium ou un oxyde de titane.

8. Vitrage selon la revendication précédente, dans lequel l'épaisseur de la couche en oxyde diélectrique est comprise entre 1 et 15 nanomètres.

9. Vitrage selon l'une des revendications précédentes, dans lequel l'empilement est constitué par la succession des couches suivantes, à partir de la surface du substrat verrier :
- une couche inférieure constituée essentiellement de nitrure de silicium et comprenant éventuellement de l'aluminium, d'épaisseur comprise entre 30 et 100 nm, de préférence entre 40 et 90 nm,
- une première couche intermédiaire d'un alliage de Nickel et de Chrome, éventuellement partiellement ou entièrement oxydée et/ou nitrurée, d'épaisseur comprise entre 0,5 et 3 nm, de préférence entre 1 et 2,5nm,
- une couche d'ITO d'épaisseur comprise entre 100 et 250 nm,
- une deuxième couche intermédiaire d'un alliage de Nickel et de Chrome, éventuellement partiellement ou entièrement oxydée et/ou nitrurée, d'épaisseur comprise entre 0,5 et 3 nm, de préférence entre 1 et 2,5nm,
- une couche supérieure constituée essentiellement de nitrure de silicium et comprenant éventuellement de l'aluminium, d'épaisseur comprise entre 30 et 100 nm.

10. Vitrage selon la revendication précédente, comprenant en outre, au dessus de la couche supérieure, une couche en un oxyde diélectrique choisi parmi l'oxyde de silicium ou un oxyde de titane, d'épaisseur comprise entre 1 et 10 nm.

## Patentansprüche

1. Sonnenschutzverglasung, die ein Glassubstrat umfasst, das auf einer seiner Flächen mit einer Stapelung aus Schichten mit Sonnenschutzfunktion versehen ist, wobei die Stapelung die Aufeinanderfolge der folgenden Schichten ausgehend von der Oberfläche des Glassubstrats umfasst:
- eine untere Schicht zum Schutz der oberen Schichten vor der Migration der alkalischen Ionen, die aus dem Glassubstrat stammen, mit einer Stärke zwischen 25 und 100 nm,
- eine Schicht aus einem gemischtem Indium- und Zinnoxid (ITO), mit einer Stärke zwischen 100 und 250 nm,
- eine obere Schicht zum Schutz der ITO-Schicht vor dem Sauerstoff der Luft, insbesondere bei einer Wärmebehandlung, wie eines Temperns oder Glühens, wobei die obere Schicht eine Stärke zwischen 25 und 100 nm hat,
wobei die Verglasung **dadurch gekennzeichnet ist, dass**:
- die obere und die untere Schicht im Wesentlichen aus einem dielektrischen Material bestehen, das aus einem Siliziumnitrid, einem Aluminiumnitrid oder ihrem Gemisch ausgewählt ist,
- Zwischenschichten, die aus einem Metall hergestellt sind, das Chrom umfasst, die eventuell teilweise oder vollständig oxidiert und/oder nitriert sind, auf jeder Seite und in Berührung mit der ITO-Schicht angeordnet sind, wobei die Stärke der Zwischenschichten zwischen 0,5 und 3 Nanometer liegt.

2. Verglasung nach dem vorhergehenden Anspruch, wobei die Stärke der Zwischenschichten zwischen 1 und 2,5 Nanometer liegt.

3. Verglasung nach einem der vorhergehenden Ansprüche, wobei das Metall mindestens 10 Gew.-% Cr umfasst.

4. Verglasung nach einem der vorhergehenden Ansprüche, wobei das Metall eine Legierung aus Nickel und Chrom ist.

5. Verglasung nach einem der vorhergehenden Ansprüche, wobei das Cr/Ni-Gewichtsverhältnis in der Legierung zwischen 10:90 und 40:60 liegt.

6. Verglasung nach einem der vorhergehenden Ansprüche, wobei die untere und die obere Schutzschicht im Wesentlichen aus einem Siliziumnitrid bestehen, das eventuell mit einem Element, das aus Al, Zr oder B ausgewählt ist, dotiert ist.

7. Verglasung nach einem der vorhergehenden Ansprüche, die außerdem oberhalb der oberen Schicht eine Schicht aus einem dielektrischen Oxid umfasst, das aus Siliziumoxid oder einem Titanoxid ausgewählt ist.

8. Verglasung nach dem vorhergehenden Anspruch, wobei die Stärke der Schicht aus dielektrischem Oxid zwischen 1 und 15 Nanometer liegt.

9. Verglasung nach einem der vorhergehenden Ansprüche, wobei die Stapelung aus der Aufeinanderfolge der folgenden Schichten ausgehend von der Oberfläche des Glassubstrats besteht:
- einer unteren Schicht, die im Wesentlichen aus Siliziumnitrid besteht und eventuell Aluminium umfasst, mit einer Stärke zwischen 30 und 100 nm, bevorzugt zwischen 40 und 90 nm,
- einer ersten Zwischenschicht aus einer Legierung aus Nickel und Chrom, die eventuell teilweise oder vollständig oxidiert und/oder nitriert ist, mit einer Stärke zwischen 0,5 und 3 nm, bevorzugt zwischen 1 und 2,5 nm,
- einer ITO-Schicht mit einer Stärke zwischen 100 und 250 nm,
- einer zweiten Zwischenschicht aus einer Legierung aus Nickel und Chrom, die eventuell teilweise oder vollständig oxidiert und/oder nitriert ist, mit einer Stärke zwischen 0,5 und 3 nm, bevorzugt zwischen 1 und 2,5 nm,
- einer oberen Schicht, die im Wesentlichen aus Siliziumnitrid besteht und eventuell Aluminium umfasst, mit einer Stärke zwischen 30 und 100 nm.

10. Verglasung nach dem vorhergehenden Anspruch, die außerdem oberhalb der oberen Schicht eine Schicht aus einem dielektrischen Oxid, das aus Siliziumoxid oder einem Titanoxid ausgewählt ist, mit einer Stärke zwischen 1 und 10 nm umfasst.

## Claims

1. A solar control glazing comprising a glass substrate provided, on one of its faces, with a stack of layers having a solar protection function, in which the stack comprises the sequence of the following layers, starting from the surface of the glass substrate:
- a lower layer for protecting the upper layers against the migration of the alkali metal ions resulting from the glass substrate, with a thickness of between 25 and 100 nm,
- a layer of an indium tin oxide (ITO), with a thickness of between 100 and 250 nm,
- an upper layer for protecting the ITO layer against atmospheric oxygen, in particular during a heat treatment, such as a tempering or an annealing, the upper layer having a thickness of between 25 and 100 nm,
said glazing being **characterized in that**:
- said upper and lower layers are essentially composed of a dielectric material chosen from a silicon nitride, an aluminum nitride or their mixture,
- intermediate layers made from a chromium-comprising metal, which layers are optionally partially or completely oxidized and/or nitrided, are positioned on either side of and in contact with said ITO layer, the thickness of said intermediate layers being between 0.5 and 3 nanometers.

2. The glazing as claimed in the preceding claim, in which the thickness of said intermediate layers is between 1 and 2.5 nanometers.

3. The glazing as claimed in either of the preceding claims, in which the metal comprises at least 10% by weight of Cr.

4. The glazing as claimed in one of the preceding claims, in which the metal is an alloy of nickel and of chromium.

5. The glazing as claimed in the preceding claim, in which the Cr/Ni ratio by weight in the alloy is between 10/90 and 40/60.

6. The glazing as claimed in one of the preceding claims, in which the lower and upper protective layers are essentially composed of a silicon nitride, optionally doped with an element chosen from Al, Zr or B.

7. The glazing as claimed in one of the preceding claims, additionally comprising, above the upper layer, a layer made of a dielectric oxide chosen from silicon oxide or a titanium oxide.

8. The glazing as claimed in the preceding claim, in which the thickness of the layer made of dielectric oxide is between 1 and 15 nanometers.

9. The glazing as claimed in one of the preceding claims, in which the stack is composed of the sequence of the following layers, starting from the surface of the glass substrate:
- a lower layer essentially composed of silicon nitride and optionally comprising aluminum, with a thickness of between 30 and 100 nm, preferably between 40 and 90 nm,
- a first intermediate layer of an alloy of nickel and chromium, optionally partially or completely oxidized and/or nitrided, with a thickness of between 0.5 and 3 nm, preferably between 1 and 2.5 nm,
- an ITO layer with a thickness of between 100 and 250 nm,
- a second intermediate layer of an alloy of nickel and chromium, optionally partially or completely oxidized and/or nitrided, with a thickness of between 0.5 and 3 nm, preferably between 1 and 2.5 nm,
- an upper layer essentially composed of silicon nitride and optionally comprising aluminum, with a thickness of between 30 and 100 nm.

10. The glazing as claimed in the preceding claim, additionally comprising, above the upper layer, a layer made of a dielectric oxide chosen from silicon oxide or a titanium oxide, with a thickness of between 1 and 10 nm.
